# EUROPEAN PATENT APPLICATION

(11) **EP 0 867 815 A2**
(43) Date of publication of application: **30.09.1998**
(21) Application number: 98302256.7
(22) Date of filing: 25.03.1998
(51) Int. Cl.: G06F 17/28

(54) **Translation service providing method and translation service system**

(30) Priority: 26.03.1997 JP 73537/97
(71) Applicant: KABUSHIKI KAISHA TOSHIBA, Kawasaki-shi (JP)
(72) Inventor: Kumano, Akira, 1-1 Shibaura 1-chome Minato-ku Tokyo 105 (JP); Nakayama, Keisuke, 1-1 Shibaura 1-chome Minato-ku Tokyo 105 (JP)
(74) Representative: Waldren, Robin Michael

(57) **Abstract**

A method for providing translation services is disclosed. In this method, a request for translation from a user is received, which request includes at least first language documents. If the request includes some designated terms to be used in a translation, the received first language documents are translated into second language documents on the basis of the designated terms. Those terms included in the received first language documents are extracted, which have a possibility not to be sufficiently translatable. The resultant translation and/or the extracted terms are provided to the user.

## Description

This invention relates to a translation service providing method and a translation service system for translating, by machine translation, texts sent through a network such as the Internet, and returning translations to users.

With the spread of network surroundings such as the Internet, "translation services" have been offered for translating, by machine translation, documents sent from users through the network surroundings, and returning translations to the users also through the network surroundings. In many cases, original documents sent from user terminals are translated on the basis of certain parameters (instructing the style of translation, a to-be-used technical term dictionary, translation environment, etc.), and resultant translations are returned to the user terminals, directly without any modifications. If the users would like to partially modify the original documents or the parameters, they need to transmit all information concerning new versions of the documents or the parameters.

In some translation services, users can beforehand designate terms to be used in translations. In this case, however, such term designation must be done each time the users access the translation services. In other words, management of to-be-translated terms and terms used in machine translations is left to the users.

In fact, there are many cases in which users checked and modified those portions of the original documents or parameters, which were not translated satisfactorily in previous attempts in a translation service, and asked the service to retranslate again and again.

As described above, in conventional translation services, services are completely separated from each other, and therefore the users cannot, for example, effectively modify the contents of a request for retranslation on the basis of the previous request.

It is the object of the invention to provide a translation service providing method and a translation service system capable of providing an environment in which one request for translation is effectively used when subsequent requests for retranslation or translation are made.

In a translation service providing method of the invention, a request for translation from a user is received, which includes at least first language documents. The received first language documents are translated into second language documents on the basis of designated terms, if any, included in the request, and those terms included in the received first language documents are extracted, which have a possibility not to be sufficiently translatable. The user is provided with the resultant translation and/or the extracted terms.

Further, retranslation may be performed using, as designated modified terms, ones selected from the extracted terms and modified.

In another translation service providing method of the invention, a request from a user is received, which includes at least first language documents and requests that those terms included in the first language documents be extracted, which have a possibility not to be sufficiently translatable. The terms included in the received first language documents are extracted, which have the possibility not to be sufficiently translatable. The user is provided with the extracted terms.

Preferably, the request is received via electronic mail.

Preferably, the request is received via a WWW page.

Preferably, the extraction results are transmitted via electronic mail to provide them to the user.

Preferably, the extraction results are transmitted via a WWW page to provide them to the user.

A translation service system of the invention comprises request receiving means, translation means, term extracting means and providing means. The request receiving means receives a request for translation which includes at least first language documents. The translating means translates the received first language documents into second language documents on the basis of designated terms, if any, included in the request. The term extracting means extracts those terms included in the received first language documents which have a possibility not to be sufficiently translatable. The providing means provides the user with translation results of the translating means and/or extraction results of term extracting means.

Another translation service system of the invention comprises request receiving means, term extracting means and providing means. The request receiving means receives a request from a user, which includes at least first language documents and requests that those terms included in the first language documents be extracted, which have a possibility not to be sufficiently translatable. The term extracting means extracts the terms included in the received first language documents which have the possibility not to be sufficiently translatable. The providing means provides the user with extraction results of the term extracting means.

Preferably, the request receiving means receives a request for translation via electronic mail.

Preferably, the request receiving means receives a request for translation via a WWW page.

Preferably, the providing means transmits the translation results and/or the extraction results via electronic mail.

Preferably, the providing means transmits the translation results and/or the extraction results via a WWW page.

A computer readable recording medium of the invention stores a program for causing a computer to execute: a procedure for receiving a request for translation from a user, which includes at least first language documents; a procedure for translating the received first language documents into second language documents on the basis of designated terms, if any, included in the request, and extracting those terms included in the received first language documents which have a possibility not to be sufficiently translatable; and a procedure for providing the user with the resultant translation and/or the extracted terms.

Another computer readable recording medium of the invention stores a program for causing a computer to execute: a procedure for receiving a request from a user, which includes at least first language documents and requests that those terms included in the first language documents be extracted, which have a possibility not to be sufficiently translatable; a procedure for extracting the terms included in the received first language documents which have the possibility not to be sufficiently translatable; and a procedure for providing the user with the extracted terms.

As a method for extracting the terms which have a possibility not to be sufficiently translatable, a list-up method is exemplified, wherein those terms included in the original documents are listed, which are estimated important but are nevertheless not registered as entries in the dictionaries or have no corresponding terms designated to be used in a translation. The frequency of each term in the documents, for example, can be used as a standard for judging whether the term has an important meaning in the documents.

For example, suppose that the terms "service provider" and "serial bus" have appeared in the original text eighteen times and thirteen times, respectively. If they are not registered as compound entries in the dictionaries, the user may be informed by extraction results that "service provider" and "serial bus" are translated into 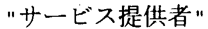 (sahbis teikyousha" in katakana and idiograms) and 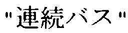 ("renzoku basu" in idiograms and katakana), respectively, which are created by combining translated words of the word components of each of the terms "service provider" and "serial bus".

Further, suppose that the term "hostname" has appeared ten times in the original text and is not listed in the dictionaries. In this case, the user may be informed by extraction results that "hostname" itself is used in the translation.

From those extraction results, the user can understand that a more appropriate translation will be obtained by designating, in a retranslation, 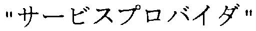 , 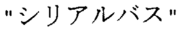 ("sahbis purobaida" and "siriaru basu" in katakana) and 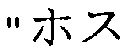 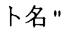 ("hosto mei" in katakana and idiogram) to "service provider", "serial bus" and "hostname", respectively.

In the invention, users can use related matters between translation services. For example, a request for retranslation can be performed in relation to the previous translation request, or translation results on one occasion can be used on another occasion of translation.

As a result, users can obtain satisfactory translations with a smaller number of process steps and less time, and hence at a lower cost.

This invention can be more fully understood from the following detailed description when taken in conjunction with the accompanying drawings, in which:
FIG. 1 is a block diagram, showing a translation service system according to an embodiment of the invention;
FIG. 2 is a flowchart, useful in explaining a procedure for machine translation performed in the translation service system of FIG. 1;
FIG. 3 is a view, showing a request for machine translation;
FIG. 4 is a view, showing translation results;
FIG. 5 is a view, showing an example of a translation request mail format;
FIG. 6 is a view, showing examples of designated terms to be used in a machine translation;
FIG. 7 is a view, showing examples of frequencies of terms;
FIG. 8 is a view, showing examples of additionally designated terms to be used in a machine translation;
FIGS. 9A and 9B are views, showing an example of a translation result-returning mail format;
FIG. 10 is a view, useful in explaining an outline of a translation service employed in the invention;
FIG. 11 is a view, showing an example of a Web page format for receiving a translation request;
FIG. 12 is a view, showing an example of a Web page format which displays translation results;
FIG. 13 is a flowchart, useful in explaining a translation service according to another embodiment of the invention; and
FIG. 14 is a view, showing results obtained from the translation service of FIG. 13.

The embodiments of the invention will be described with reference to the accompanying drawings.

Although in the embodiments, an English-Japanese translation service for translating English into Japanese is employed, it is a matter of course that the invention is also applicable to a Japanese-English translation service for translating Japanese into English, or to a translation service for translating any other language.

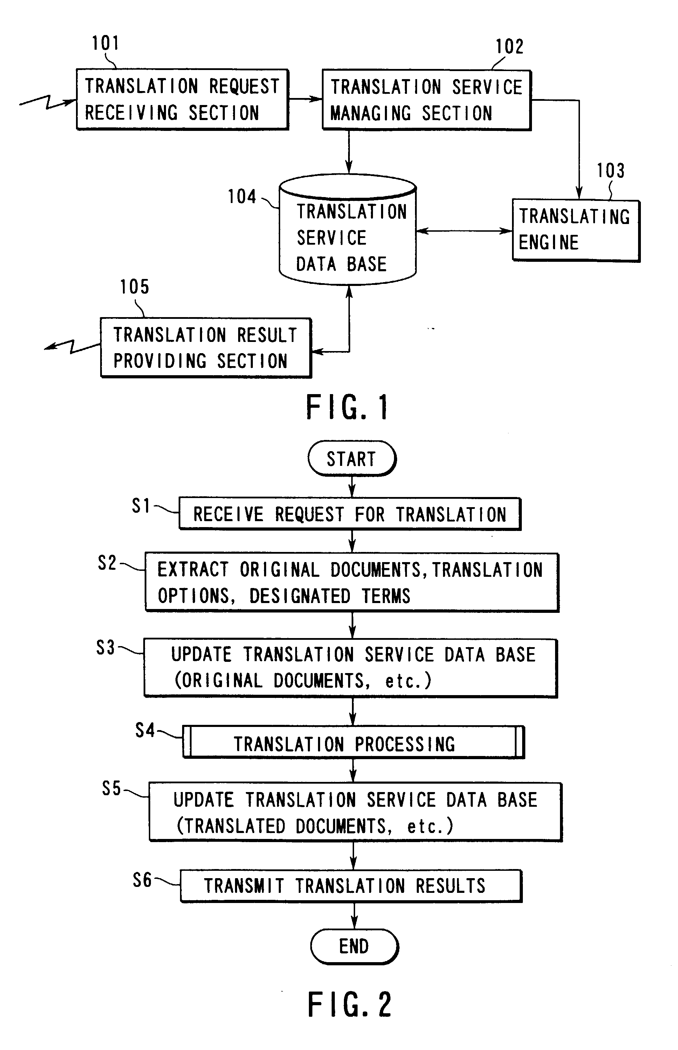

FIG. 1 is a block diagram, showing a translation service system according to an embodiment of the invention.

As is shown in FIG. 1, the translation service of the first embodiment comprises a translation request receiving section 101, a translation service managing section 102, a translation engine 103, a translation service data base 104 and a translation result providing section 105.

The translation request receiving section 101 receives the contents of a translation request, such as original documents, parameters, etc., through communication means such as the Internet. The translation request is performed by, for example, electronic mail.

The translation service managing section 102 manages the translation request. More specifically, it performs job management, document management, etc. In the job management, user information, translation requested time, translation request method, etc. are stored in the translation service data base 104 each time a request for translation is received, and are updated if necessary. The user information includes user name, user ID, electronic mail address, etc. The translation request method indicates electronic mail, WWW page, etc. In the document management, original documents, translation parameters, translated documents, term extraction results, etc. are stored in units of one job in the translation service data base 104, and updated if necessary. The translation parameters include, for example, parameters for instructing the style of translation, terms to be used in a translation, a to-be-used technical term dictionary, etc.

The translation engine 103 automatically translates original documents on the basis of material sent from the translation service managing section 102, and outputs translation results. The method for machine translation is not limited to a particular one, but may be any one available.

In a case where terms to be used in a translation are designated, the designated terms are registered in a user dictionary, and the user dictionary is used together with standard and technical term dictionaries. Any technical term dictionary can be used but only when designated. Further, all terms corresponding to an entry whose translation is designated are translated into the designated term.

The translation service data base 104 stores translation-requested original documents, resultant translations, etc. on a short- or long-term basis.

The translation result providing section 105 provides users with translation results stored in the translation service data base 104. The translation results are provided via, for example, electronic mail.

The translation service system of the invention may be constituted by one or a plurality of computers.

FIG. 2 is a flowchart, useful in explaining a procedure for machine translation performed in the translation service system of this embodiment. The operation of the system will be described by taking, as an example, "English-Japanese translation" in which English texts are translated into Japanese.

In the first step S1, the translation request receiving section 101 receives a request for translation, and sends a control signal to the translation service managing section 102.

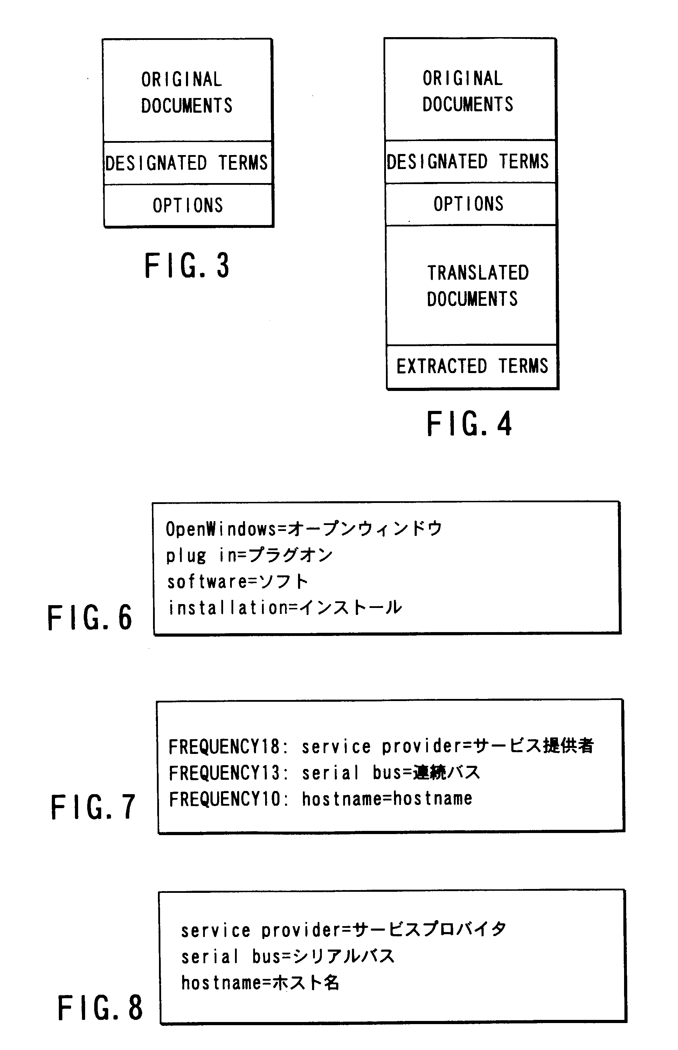

In the next step S2, original documents, translation options and designated terms are extracted from the contents of the translation request as shown in FIG. 3. The translation options indicate conditions for setting a translation environment, and include designation of the translation style, designation of a technical term dictionary, etc.

In a step S3, the original documents, the translation options and the designated terms extracted in the step S2 are written into the translation service data base 104, thereby updating the data therein.

In a step S4, the translation engine 103 performs machine translation with reference to the original documents, translation options and designated terms stored in the translation service data base 104. The engine 103 performs not only translation but also term extraction. The term extraction method is a well known one, and is described in, for example, U.S.P. 5,579,224. The contents of U.S.P. 5,579,224 are incorporated by reference in this text.

In a step S5, the resultant translation and extracted terms output in the step S4 are written into the translation service data base 104 to update it.

In a step S6, the resultant translation and extracted terms are transmitted, as translation results, together with the original documents, designated terms and options, as is shown in FIG. 4.

FIG. 5 shows an example of an electronic mail format for requesting a translation.

The section from the beginning tag description "<EJTRANS_ENVIRON> # Environmental Setting BEGINS" to the tag description "</EJTRANS_ENVIRON> # Environmental Setting ENDS" indicates a portion where translation parameters such as a style (Style) employed in a translation, a technical field (Techdic) for determining a to-be-used technical term dictionary, etc. are designated. In the FIG. 5 example, the "normal style" is designated, and the "information dictionary" is designated.

The section from the next tag description "<EJTRANS_TERMS> # Term Designation BEGINS" to the tag description "</EJTRANS_TERMS> # Term Designation ENDS" indicates a portion where terms are designated.

The section from the next tag description "<SRC_ENGLISH> # Original Documents BEGINS" to the tag description "</SRC_ENGLISH> # Original Documents ENDS" indicates a portion where an original English text is written.

FIG. 6 shows examples of designated terms to be used in a translation in this embodiment.

Term designation is performed when Japanese terms are designated for new English terms appearing in the original documents (i.e. English entries not contained in the standard English-Japanese dictionaries used in the translation service system). For example, 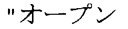 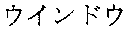 " ("ohpun wuindow" in katakana) is designated for "OpenWindows", , and 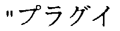 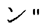 ("puragu in" in katakana) is designated for "plug in". The term designation is also performed when Japanese terms other than standard ones are designated for general English terms (i.e. English entries which are registered in the standard English-Japanese dictionaries used in the translation service system, together with corresponding Japanese terms). For example, 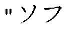 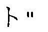 ("sofuto" in katakana) instead of 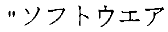 " ("sofutowuea" in katakana) is designated for "software", and 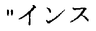 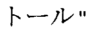 ("insutohru" in katakana) instead of 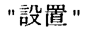 ("secchi" written in idiograms) is designated for "install".

Although in the FIG. 6 case, English entries are related to corresponding Japanese terms by means of the equal sign "=", another sign may be used if it clarifies the correspondency therebetween.

FIG. 7 shows examples of results of term extraction performed in the embodiment.

Term extraction is performed to list those English terms used in the original documents, which are not registered as entries in the system's English-Japanese dictionary, or have no Japanese terms designated to be used in a translation, although they are estimated important.

The frequency of each term in the documents, for example, can be used as a standard for judging whether the term has an important meaning in the documents.

In FIG. 7, the first two examples indicate that the compound words "service provider" and "serial bus" appeared in the original English text eighteen times and thirteen times, respectively, and that Japanese translation terms 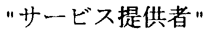 ("sahbis teikyousha" in katakana and idiograms) and 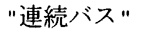 ("renzoku basu" in idiograms and katakana) were created and output by combining translated words of the word components of each of "service provider" and "serial bus", since these compound words were not found as entries in the English-Japanese dictionary.

The last example of FIG. 7 indicates that "hostname" appeared ten times in the original English text, and that "hostname" was output as a literally translated word since no entry thereof was found in the English-Japanese dictionary.

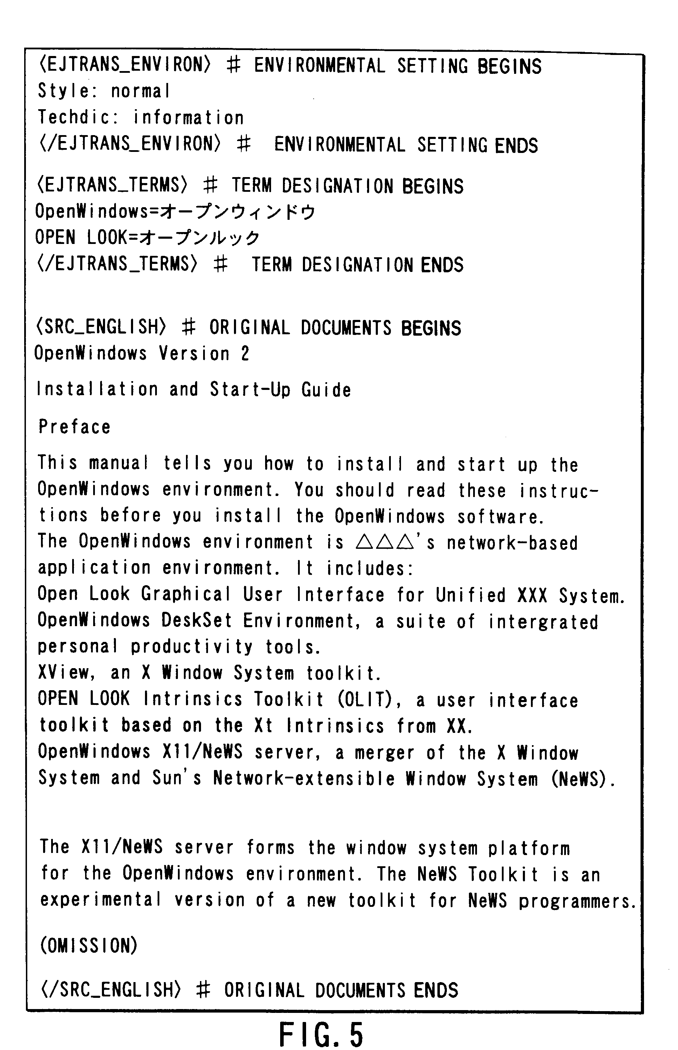

The user refers to those extraction results, and adds designated terms as shown in FIG. 8. Then, retranslation is performed by designating 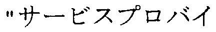 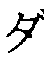 " and 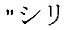 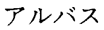 " ("sahbis purobaida" and "siriaru basu" in katakana) and 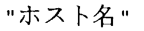 ("hosto and "siriaru basu" in katakana) and 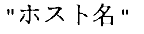 ("hosto mei" in katakana and idiogram) to "service provider", "serial bus" and "hostname", respectively. As a result, a more appropriate translation can be obtained.

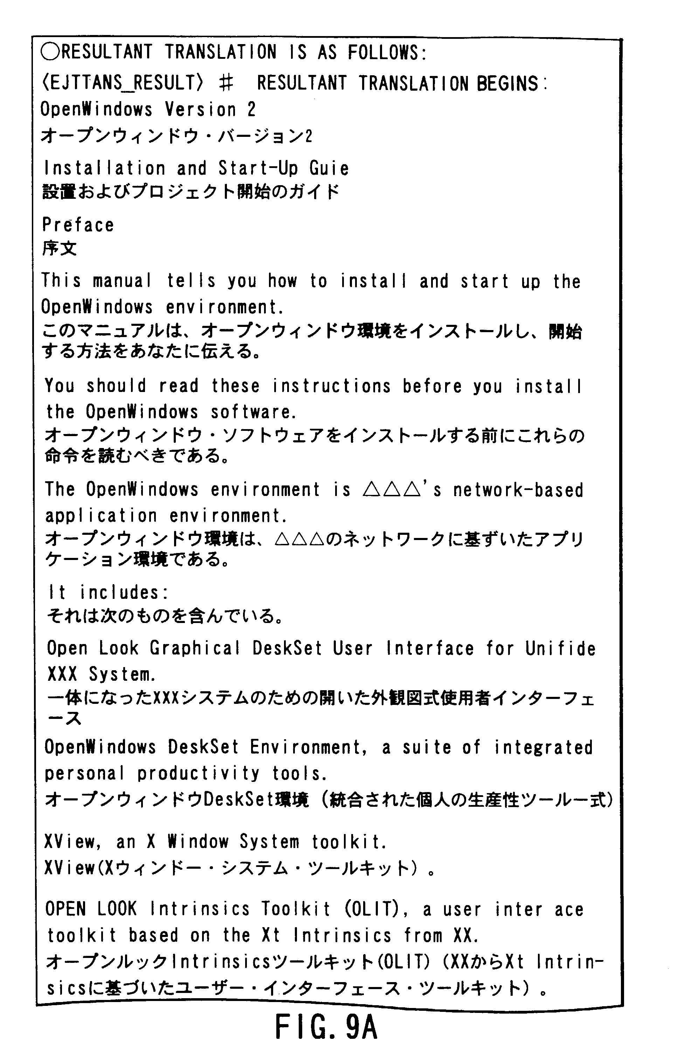

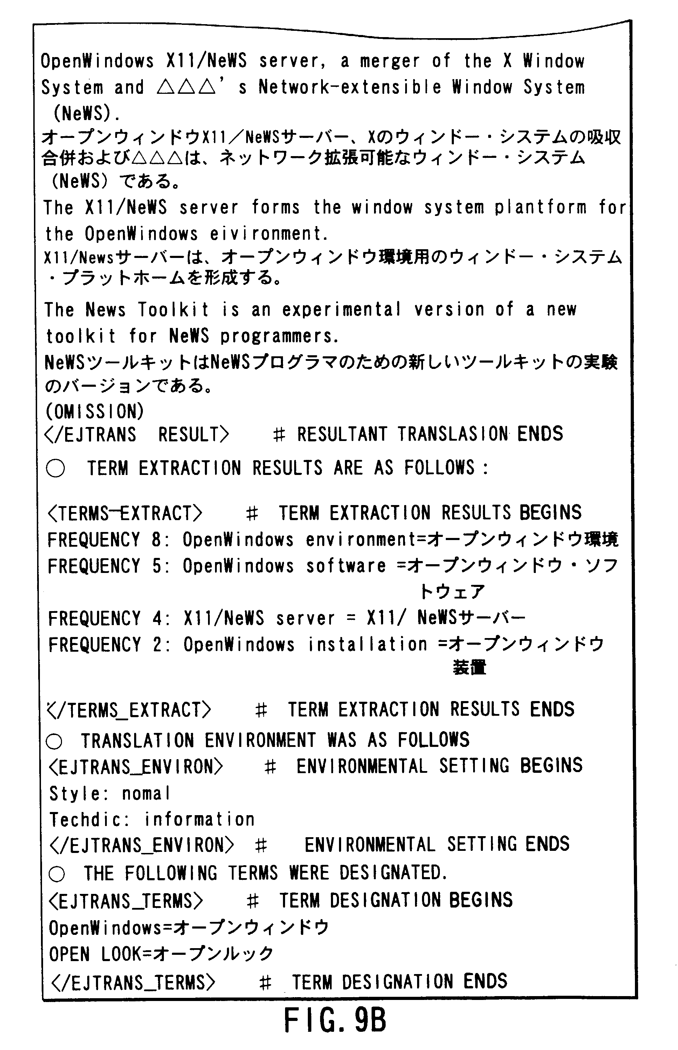

FIGS. 9A and 9B show an example of an electronic mail format used in this embodiment for returning translation results.

The section from the beginning tag description "<EJTRANS_RESULT> # Resultant Translation BEGINS" to the tag description "</EJTRANS_RESULT> # Resultant Translation ENDS" indicates a portion where the sentences of an input original text and of the resultant translation are alternately arranged.

The section from the next tag description "</TERM_ EXTRACT> # Term Extraction Result BEGINS" to the tag description "</TERM_EXTRACT> # Term Extraction Result ENDS" indicates a portion where term extraction results and terms used in the present translation are indicated.

The section from the third tag description "<EJTRANS_ENVIRON> # Environmental Setting BEGINS" to the tag description "</EJTRANS_ENVIRON> # Environmental Setting ENDS" indicates a portion where translation parameters designated at the time of requesting the translation are re-displayed.

The section from the next tag description "<EJTRANS_TERMS> # Term Designation BEGINS" to the tag description "</EJTRANS_TERMS> # Term Designation ENDS" indicates a portion where the terms designated at the time of requesting the translation are re-displayed.

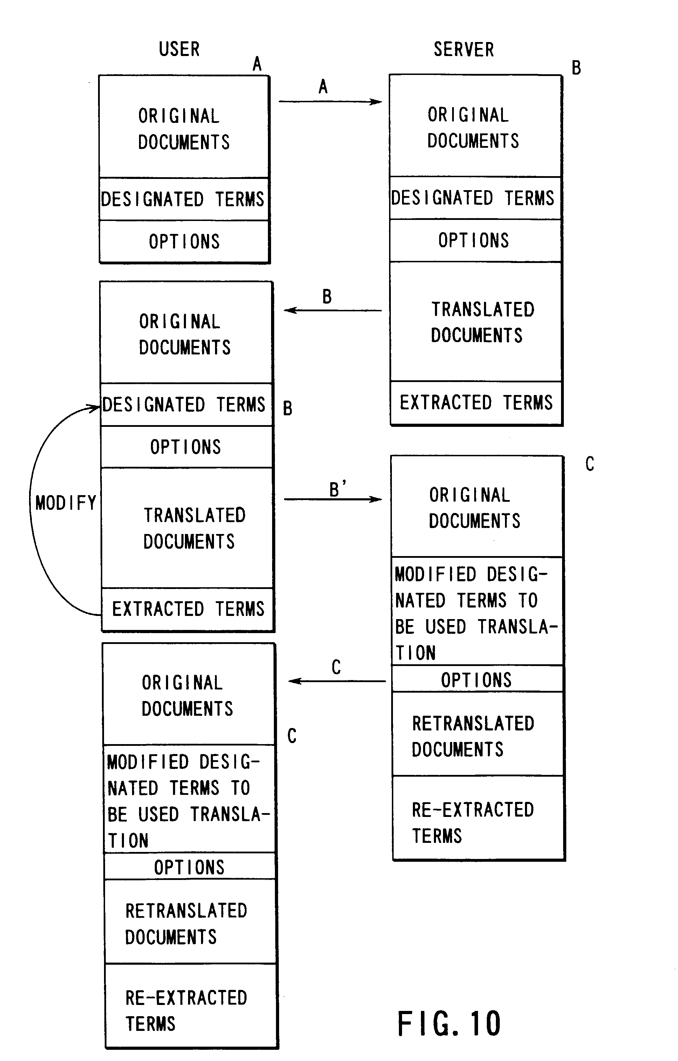

FIG. 10 shows an outline of the above-described translation service. As shown in FIG. 10, first, the user sends, to a server, a translation request A which includes an original text, designated terms and options. The server performs translation and term extraction, thereby obtaining translation results B. Then, the server sends the translation results B to the user. The user modifies the designated terms with reference to the extracted terms included in the translation results B, and then sends a modified translation request B' to the server. The server, in turn, performs retranslation in accordance with the modified translation request B', thereby outputting retranslation results C and transmitting the results C to the user. If necessary, the user re-modifies the modified designated terms on the basis of the reextracted terms, and sends a re-modified translation request to the server to obtain new translation results. By repeating the above procedures, the user can obtain a satisfactory translation.

Although in the above description, the translation request is sent by electronic mail, it can be done using a Web page.

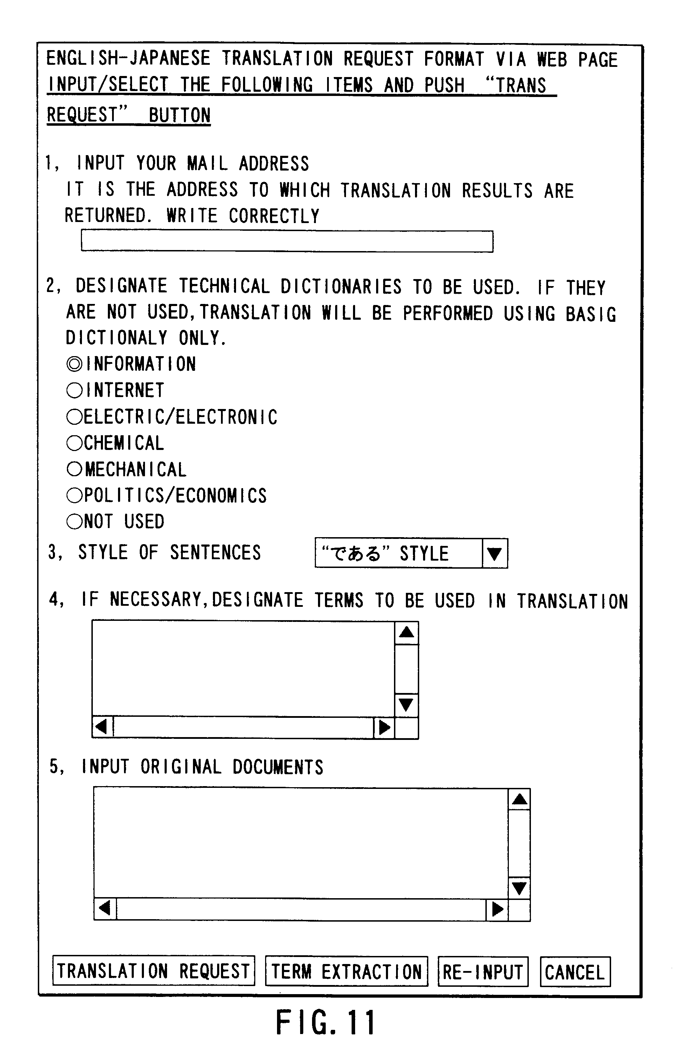

FIG. 11 shows an example of a Web page format for receiving a translation request.

In this case, an original text can be sent together with translation parameters such as a to-be-used technical term dictionary, a translation style, and information on designated terms, in addition to an electronic mail address assigned to the user and used for returning translation results. When the user inputs necessary information items and pushes a "translation request" button on the Web page shown in FIG. 11, the input information items are sent to a translation service system.

The interface of this page can be constituted of a CGI (Common Gateway Interface). For particulars of the CGI, see, for example, Documents "GUIDE TO HTML & CGI" written by Nozomi Sasaki, Masahiro Ohta and Mami Fujisaki (Eiai Publisher, published April 26, 1996). The contents of this publication are incorporated by reference in this text.

When, for example, the user has accessed a WWW server of the translation service system using a WWW browser, the WWW server fetches data on the FIG. 11 Web page from its WWW page data base, and transmits the data to the user terminal. Then, the data is displayed on the WWW browser which the user is using, as shown in FIG. 11. When the user inputs translation parameters, original documents, etc., and then pushes the "translation request" button, the input information is transmitted from the WWW browser in the user's computer to the WWW server. The WWW server, in turn, processes the information from the WWW browser, using a CGI decoder, thereby obtaining the user's input information.

Although in the above-described embodiment, electronic mail is used to return translation results to the user, a Web page can be used instead.

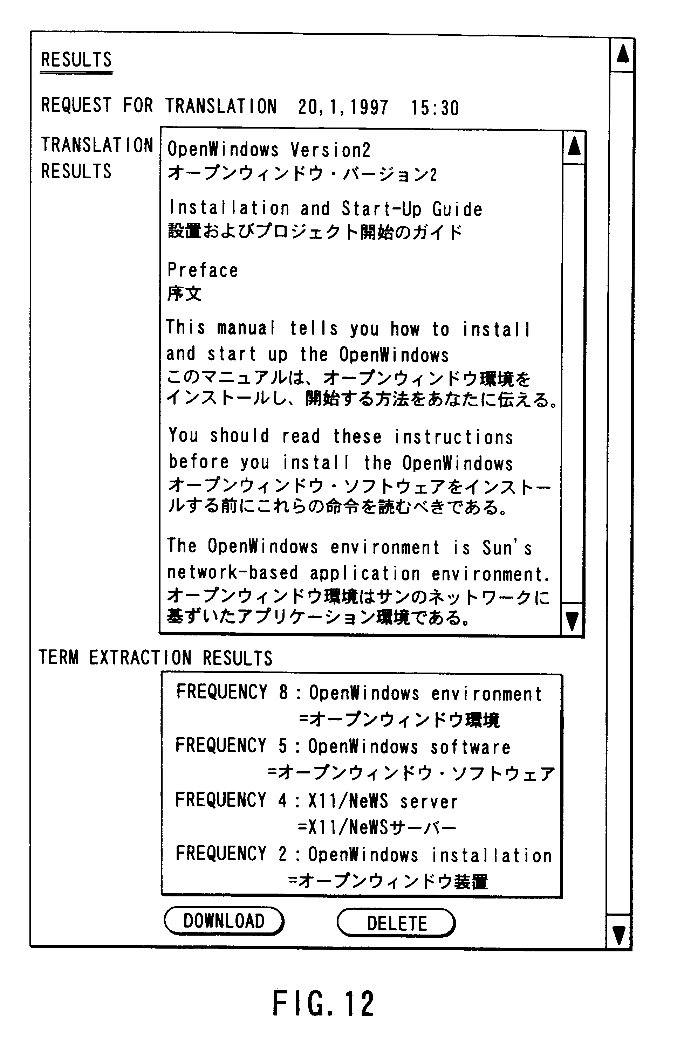

FIG. 12 shows an example of a Web page format for displaying translation results.

In this case, a pair of each original text line and its translation are displayed in a window. Term extraction results are displayed in another window. In this example, the translation results can be downloaded or deleted if necessary.

The interface of the page can be constituted of, for example, a CGI, as in the case of the translation request.

In this case, for example, the WWW server fetches data on the FIG. 12 page from the WWW page data base, thereby adding the translation results to the data, transmitting them to the user terminal, and displaying them on the WWW browser which the user is using.

Although in the FIGS. 9A and 9B example, the resultant translation includes the sentences of the original text and of the translation, which are alternately arranged, only the translation sentences may be returned to the user.

Translation may be performed between languages other than English and Japanese, such as German and Japanese. Further, Japanese may be translated into English or German, instead of translation from English or German to Japanese.

In addition, communication means for receiving translation requests is not limited to the Internet, but may be the Intranet or the LAN.

The manner of the term designation is not limited to the arrangement of original entry terms and their corresponding terms in pairs. For example, corresponding terms can be designated for combinations of original terms as follows: To designate 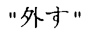 ("hazusu") for "remove" when "remove" is used to remove a "cover" or a "pin", a description as below is given.
remove (cover, pin) = 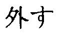

Such designation can be realized by registering the relationship in the user dictionary.

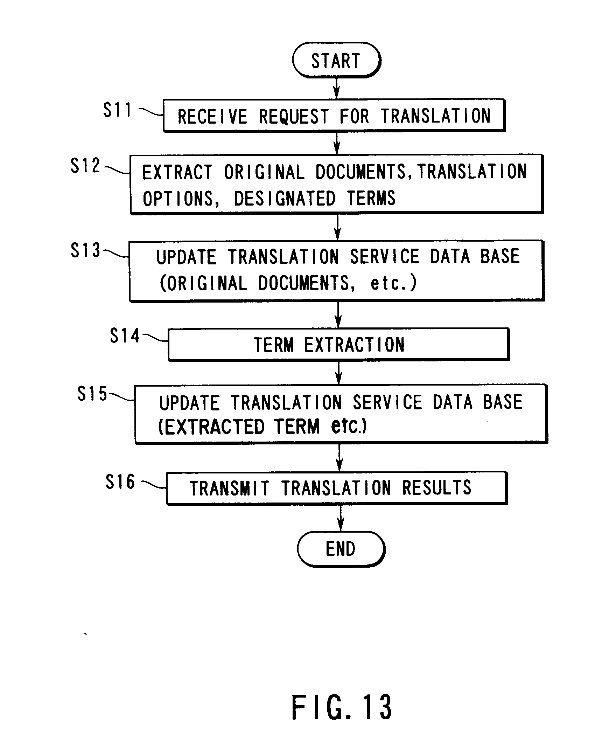

Moreover, the translation service system can offer a service for only term extraction without translation. FIG. 13 is a flowchart, useful in explaining this service.

The basic structure of the flowchart is similar to the FIG. 2 embodiment except that processing for translation is replaced with processing for term extraction. In this case, only minimum analysis of sentence construction necessary for term extraction is performed. An electronic mail format for requesting term extraction may be similar to the example of FIG. 5.

In the case of an electronic mail format for returning term extraction results, input of an original text and its translation in the section from the tag description "<EJTRANS_RESULT> # Resultant Translation BEGINS" to the tag description "</EJTRANS_RESULT> # Resultant Translation ENDS" included in the mail format of FIGS. 9A and 9B is omitted.

A Web page format for receiving a term extraction request is shown in FIG. 11. A "term extraction" button for instructing term extraction is provided in addition to the "translation request" button. Desired extraction results can be obtained by pushing the "term extraction" button.

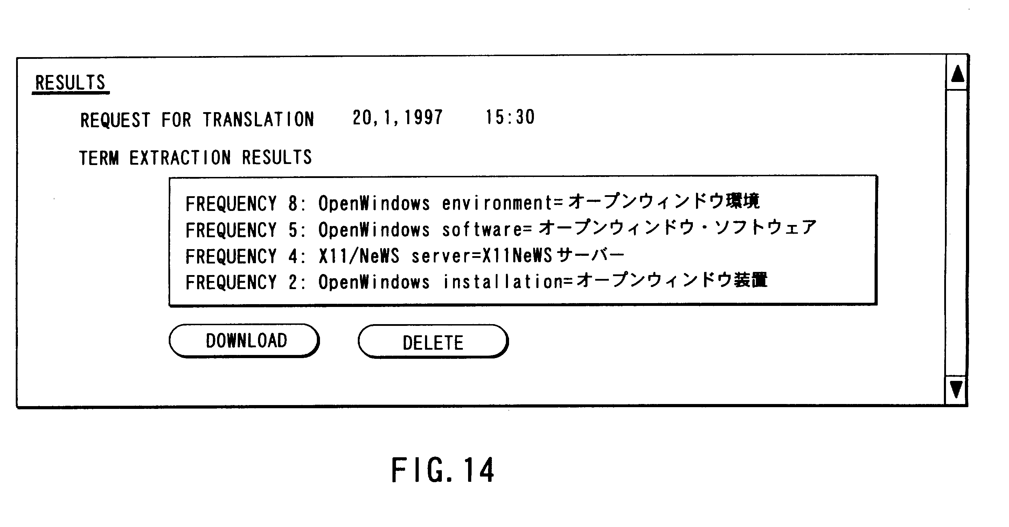

In a Web page format for displaying processing results, for example, the "resultant translation" section appearing in FIG. 12 is omitted as shown in FIG. 14.

Further, this case may be modified such that both the resultant translation and extracted terms are shown at all times, or that translation and term extraction are performed only when the user has requested term extraction. Also, it can be modified such that the user can select one of (1) a service for offering both a translation and term extraction results, (2) a service for offering only a translation, and (3) a service for offering only term extraction results. In the case of performing only term extraction, it suffices if minimum sentence construction analysis necessary for term extraction is performed.

The above-described functions can be realized by software installed in a computer as programs for causing the computer to execute procedures or means. Moreover, the functions can be realized using a computer-accessible medium which stores such software.

## Claims

1. A method for providing translation services, characterized by comprising the steps of:
receiving a request for translation from a user, which includes at least first language documents;
translating the received first language documents into second language documents on the basis of designated terms, if any, included in the request, and extracting those terms included in the received first language documents which have a possibility not to be sufficiently translatable; and
providing the user with the resultant translation and/or the extracted terms.

2. A method according to claim 1, characterized in that retranslation is performed using, as designated modified terms, ones selected from the extracted terms and modified.

3. A method for providing translation services, characterized by comprising the steps of:
receiving a request from a user, which includes at least first language documents and requests that those terms included in the first language documents be extracted, which have a possibility not to be sufficiently translatable;
extracting the terms included in the received first language documents which have the possibility not to be sufficiently translatable; and
providing the user with the extracted terms.

4. A method according to any one of claim 1 to 3, characterized in that the request is received via electronic mail.

5. A method according to any one of claim 1 to 3, characterized in that the request is received via WWW page.

6. A method according to any one of claim 1 to 3, characterized in that the extraction results are transmitted via electronic mail to provide them to the user.

7. A method according to claim 1 to 3,
characterized in that the resultant translation and/or the extraction results are transmitted via a WWW page to provide them to the user.

8. A translation service system characterized by comprising:
request receiving means (101) for receiving a request for translation from a user, which includes at least first language documents;
translating means (103) for translating the received first language documents into second language documents on the basis of designated terms, if any, included in the request;
term extracting means (103) for extracting those terms included in the received first language documents which have a possibility not to be sufficiently translatable; and
providing means (105) for providing the user with translation results of the translating means and/or extraction results of term extracting means.

9. A translation service system characterized by comprising:
request receiving means (101) for receiving a request from a user, which includes at least first language documents and requests that those terms included in the first language documents be extracted, which have a possibility not to be sufficiently translatable;
term extracting means (103) for extracting the terms included in the received first language documents which have the possibility not to be sufficiently translatable; and
providing means (105) for providing the user with extraction results of the term extracting means.

10. A computer readable recording medium which stores a program for causing a computer to execute:
a procedure for receiving a request for translation from a user, which includes at least first language documents;
a procedure for translating the received first language documents into second language documents on the basis of designated terms, if any, included in the request, and extracting those terms included in the received first language documents which have a possibility not to be sufficiently translatable; and
a procedure for providing the user with the resultant translation and/or the extracted terms.

11. A computer readable recording medium which stores a program for causing a computer to execute:
a procedure for receiving a request from a user, which includes at least first language documents and requests that those terms included in the first language documents be extracted, which have a possibility not to be sufficiently translatable;
a procedure for extracting the terms included in the received first language documents which have the possibility not to be sufficiently translatable; and
a procedure for providing the user with the extracted terms.
